# FASCICULE DE BREVET EUROPEEN

(11) **EP 2 731 765 B1**
(45) Date de publication et mention de la délivrance du brevet: **05.04.2017**
(21) Numéro de dépôt: 12735301.9
(22) Date de dépôt: 12.07.2012
(51) Int. Cl.: B27L 5/02, B27J 7/00, B27M 1/02, B27D 1/04

(54) **PROCEDE DE FABRICATION DE FEUILLES A PARTIR DE TRONC DE BANANIER ET FEUILLE OBTENUE PAR UN TEL PROCEDE**
HERSTELLUNGSVERFAHREN FÜR EIN AUS BANANENHOLZ GEFERTIGES FURNIER UND FURNIER HERGESTELLT NACH DIESEM VERFAHREN
MANUFACTURING PROCESS OF VENEER MADE OF A BANANA TREE TRUNK AND VENEER MADE BY THIS PROCESS

(30) Priorité: 13.07.2011 FR 1156440
(43) Date de publication de la demande: 21.05.2014
(73) Titulaire: FIB & Co, 97224 Ducas (FR)
(72) Inventeur: HAYOT, Vladimir, F-97224 Ducos (FR); CHEMINON, Nicolas, F-97224 Ducos (FR)
(74) Mandataire: Lavialle, Bruno François Stéphane
(86) Numéro de dépôt international: PCT/EP2012/063739
(87) Numéro de publication internationale: WO 2013/007803

(56) Documents cités:
- WO-A1-2012/019247
- FR-A- 1 460 600
- GB-A- 2 285 406
- US-A- 2 660 548
- US-A- 3 981 338
- US-A1- 2004 250 508
- US-A1- 2006 027 319

## Description

L'invention concerne un procédé de fabrication de feuilles obtenues à partir de pseudo-troncs de bananier, et les feuilles ainsi obtenues. Ces feuilles peuvent notamment être utilisées comme feuille de placage, ou autre revêtement décoratif.

### ARRIERE-PLAN DE L'INVENTION

L'engouement récent pour la décoration a accru la demande en nouveaux matériaux décoratifs, en particulier des matériaux naturels. Par ailleurs, le consommateur est de plus en plus attentif à l'environnement et privilégie les matériaux recyclables, obtenus par des procédés non polluants, sans additifs chimiques et *a fortiori* dont la fabrication permet de recycler ou exploiter les déchets.

La culture de la banane génère une biomasse importante peu ou pas exploitée. En effet, après la récolte du régime de bananes, le pseudo-tronc est coupé et, comme il n'a aucune valeur en lui-même, est généralement laissé sur la plantation. Le pourrissement des pseudo-troncs de bananier sur le sol accroît la prolifération des maladies et parasites. Ainsi, des solutions pour exploiter les déchets des bananeraies sont recherchées.

Par exemple, il est connu d'utiliser les fibres des pseudo-troncs de bananier pour la production de papier. Ainsi, la demande de brevet WO 2006/029469 décrit une méthode qui permet d'obtenir des « feuilles » utilisées notamment pour la fabrication de papier ou autres produits de papèterie en déroulant le pseudo-tronc de bananier. Les « feuilles » ainsi obtenues sont continues. Elles ont une largeur et une longueur déterminées respectivement par la hauteur et le diamètre du pseudo-tronc utilisé. Cette méthode applique des techniques classiques de fabrication de feuilles à partir d'un tronc d'arbre à un pseudo-tronc de bananier dont la constitution, les caractéristiques mécaniques et la teneur en eau sont très différentes, notamment plus grande souplesse et teneur en eau plus importante. La mise en oeuvre de la méthode demande donc une parfaite maîtrise de ces techniques pour parvenir aux résultats escomptés.

### OBJET DE L'INVENTION

Par l'invention, on propose d'utiliser les déchets de bananier et, en particulier, les pseudo-troncs pour produire, simplement et le plus écologiquement possible, un nouveau matériau utilisable en décoration.

Ainsi, il est proposé un procédé écologique de fabrication à façon (avec des dimensions et des motifs variables) de feuilles, notamment utilisables pour le placage, obtenues à partir de pseudo-troncs de bananier et sans apport de produits chimiques. L'invention concerne également les feuilles obtenues par le procédé objet de l'invention.

### RESUME DE L'INVENTION

Plus précisément, l'invention concerne un procédé de fabrication de feuilles en pseudo-tronc de bananier, comportant les étapes suivantes :
- découper une poutre dans une portion centrale du pseudo-tronc de bananier,
- trancher des lamelles dans la poutre,
- laminer les lamelles ainsi obtenues,
- former une feuille en assemblant les lamelles de telle manière qu'elles se chevauchent sur une largeur prédéterminée,
- presser et sécher la feuille ainsi obtenue.

Ainsi, il n'est pas réalisé de « déroulage » du pseudo-tronc de bananier, mais un tranchage pour obtenir des lamelles dont l'assemblage permettra de constituer une feuille. L'assemblage est réalisé par pressage des portions chevauchantes des lamelles les unes contre les autres, ce qui assure une fixation des lamelles les unes aux autres sans recourir à un apport externe d'adhésif. Ce procédé repose de la sorte sur un principe particulièrement simple.

L'invention concerne également les feuilles de placage obtenues par l'assemblage de lamelles de pseudo-tronc de bananier.

D'autres caractéristiques et avantages de l'invention ressortiront à la lecture de la description qui suit d'un mode de mise en oeuvre particulier non limitatif de l'invention.

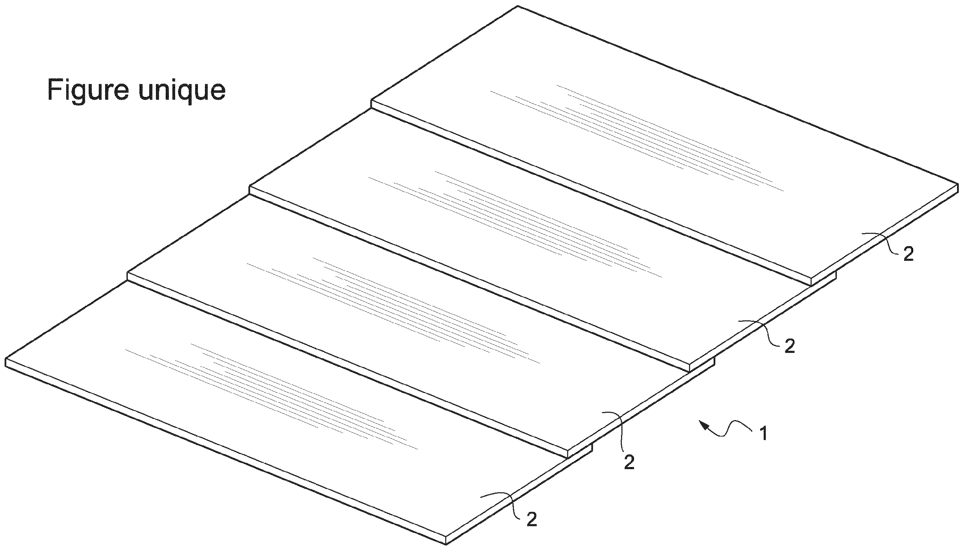

Il sera fait référence à la figure unique annexée représentant en perspective une feuille conforme à l'invention.

### DESCRIPTION DETAILLEE DE L'INVENTION

Les bananiers (*Musa spp*.) sont des plantes monocotylédones cultivées dans les régions inter tropicales. Ce sont des plantes herbacées non ligneuses qui peuvent atteindre plusieurs mètres de haut. Le pseudo-tronc est constitué par le pétiole des feuilles. Le coeur du pseudo-tronc est quant à lui formé par la hampe florale qui donnera ensuite naissance au régime de bananes. Après la récolte du régime de bananes, le bananier est coupé. Le pseudo-tronc peut alors être transformé par le procédé objet de l'invention.

Conformément au procédé de l'invention, une poutre est découpée dans le coeur du pseudo-tronc. La coupe peut se faire par tous moyens, de préférence, par une machine à scie circulaire. D'autres moyens de coupe peuvent aussi être utilisés tels que le couteau, la scie à ruban et autres lames, ainsi que tout moyen susceptible de dégager une poutre dans le pseudo-tronc.

Ainsi, de manière préférée, la poutre sera découpée dans le sens de la longueur du coeur du pseudo-tronc. La longueur de la poutre correspond donc à la longueur du pseudo-tronc. La poutre a une section rectangulaire ayant une plus grande dimension correspondant sensiblement au diamètre du pseudo-tronc et une plus petite dimension correspondant sensiblement à la largeur de coupe. Les traits de coupe sont centrés par rapport au pseudo-tronc de telle sorte que la poutre ainsi obtenue s'inscrive dans le coeur. La poutre est obtenue par coupes successives du pseudo-tronc de bananier de telle sorte qu'à chaque passage la position du trait de coupe soit optimisée pour conserver une poutre de section carrée ou rectangulaire de dimensions optimales inscrite dans le coeur du pseudo-tronc. Les joues ou dosses sont ainsi successivement éliminées par une succession de découpes. De manière préférentielle, la plus petite dimension est inférieure à 70 mm et, de préférence, comprise entre 45 et 60mm environ.

Une variante du procédé de l'invention consiste à couper la poutre obtenue à l'étape précédente afin d'obtenir une poutre de section carrée avec un côté compris entre 45 et 60mm environ.

Les poutres ainsi obtenues, qu'elles soient de section rectangulaire ou carrée, sont ensuite placées sur un support qui permet de trancher des lamelles par des découpes de la poutre. Les lamelles sont tranchées une par une, par passages successifs de la lame. Ceci permet d'assurer une meilleure régularité de l'épaisseur des lamelles et éventuellement de modifier l'épaisseur d'une lamelle à une autre. Le tranchage est préférentiellement longitudinalement réalisé par un système à lame.

Les lamelles ont une longueur identique à celle de la poutre, une largeur également identique et une épaisseur inférieure à 10 mm, et de manière préférentielle, comprise entre 1 et 4 mm. Les poutres de section rectangulaire ou carrée permettent l'obtention lors de l'étape de tranchage, de lamelles avec des longueurs et largeurs parfaitement identiques et des épaisseurs qui sont également identiques mais peuvent aussi être variables.

Selon un mode privilégiée de l'invention, les lamelles sont ensuite passées dans un laminoir afin d'en extraire un jus. Plusieurs passages dans le laminoir peuvent être réalisés, afin d'extraire le maximum de jus. Cette étape est particulièrement importante car elle confère une certaine tenue aux lamelles. Ceci permet d'éviter que les lamelles ne se déchirent ou soient abimées lors des manipulations successives de l'étape d'assemblage.

Après laminage, les lamelles sont associées les unes avec les autres de telle sorte qu'elles se chevauchent sur une zone prédéterminée.

On définit par « feuille » l'ensemble formé par des lamelles ainsi assemblées les unes avec les autres.

Une feuille peut être constituée par des lamelles placées parallèlement les unes aux autres en ayant au moins une bordure chevauchant une bordure d'une lamelle adjacente. De préférence, la zone de chevauchement est inférieure à 10 mm.

Il est également possible de placer les lamelles perpendiculairement les unes aux autres de telle sorte à réaliser un motif de natte. La zone de chevauchement correspond alors à la largeur de la lamelle.

Bien entendu, les lamelles peuvent également être positionnées de telle sorte qu'elles forment un autre type de motif, comme par exemple un motif en épi, ou un dessin. Le motif ou le dessin doit être formé de telle sorte que chaque lamelle chevauche une autre lamelle sur une superficie totale supérieure à 1 cm². Comme les lamelles obtenues selon l'invention ont des longueurs et des largeurs identiques, les motifs obtenus sont très réguliers. Selon les techniques classiquement utilisées, il est bien entendu possible d'obtenir des feuilles à partir de plusieurs essences végétales différentes permettant de créer des nuances de couleurs.

Les dimensions des feuilles obtenues sont adaptées en fonction des utilisations. De manière standard, les dimensions des feuilles réalisées selon l'invention sont de 130 cm × 350 cm.

De manière privilégiée et afin d'obtenir des feuilles de meilleure qualité, les lamelles sont assemblées sur une plaque rigide puis recouvertes d'une couche absorbante. Une dizaine d'ensembles plaque-feuille-couche sont empilés puis pressés dans une presse de façon à fixer l'assemblage de lamelles et extraire l'humidité résiduelle, qui est absorbée par la couche absorbante. La couche absorbante peut être constituée de tout matériau absorbant, ce peut être un tissu ou une toile de coton, une feuille de papier ou toute autre matière permettant l'absorption de l'humidité.

Le pressage peut en variante être effectué sur chaque lamelle individuellement.

L'assemblage des lamelles se fait sans ajout de colle.

Les feuilles ainsi obtenues sont ensuite séchées. Le séchage permet de fixer définitivement l'assemblage. Le séchage peut résulter du pressage précédent et/ou comprendre une étape supplémentaire de séchage.

Les feuilles obtenues conformément à l'invention sont relativement souples et peuvent servir de feuilles de revêtement. Elles ont, en outre, un motif parfaitement régulier dû aux dimensions identiques de chacune des lamelles.

Les feuilles, selon l'invention, constituées de lamelles de pseudo-tronc de bananier peuvent être utilisées comme feuille de placage sur des meubles ou des éléments de décoration.

Selon l'usage, il est possible d'entoiler les feuilles obtenues de manière à les rigidifier ou à permettre leur utilisation comme revêtement de mur.

Il est aussi possible d'y appliquer un vernis ou un traitement de protection.

Conformément à l'invention, les feuilles ainsi obtenues peuvent être collées sur un support, afin, par exemple, de les utiliser comme revêtement de sol.

Les feuilles obtenues selon l'invention peuvent être translucides, lorsque l'épaisseur des lamelles est inférieure à 5 mm. Ces feuilles peuvent alors être utilisées, par exemple, pour réaliser des stores, des abat-jour ou tout autre objet requérant le passage de la lumière.

Bien entendu, l'invention n'est pas limitée au mode de mise en oeuvre décrit, mais au contraire englobe toute variante entrant dans le champ de l'invention telle que définie par les revendications.

## Revendications

1. Procédé de fabrication d'une feuille à partir de pseudo-tronc de bananier, **caractérisé en ce qu'**il comprend les étapes de :
- découper une poutre dans une portion centrale du pseudo-tronc,
- trancher des lamelles dans la poutre,
- laminer les lamelles ainsi obtenues,
- former une feuille en assemblant les lamelles de telle manière qu'elles se chevauchent sur une largeur prédéterminée,
- presser et sécher la feuille ainsi obtenue.

2. Procédé de fabrication d'une feuille à partir de pseudo-tronc de bananier selon la revendication 1, **caractérisé en ce que** les lamelles tranchées ont une épaisseur inférieure à 10 mm.

3. Procédé de fabrication d'une feuille à partir de pseudo-tronc de bananier selon la revendication 1, **caractérisé en ce que** les lamelles qui forment la feuille sont assemblées sur une plaque rigide et couverte d'une toile absorbante.

4. Procédé selon la revendication 1, comprenant les étapes de :
a- découper, par passages successifs d'une lame, une poutre dans une portion centrale du pseudo-tronc,
b- trancher une à une, des lamelles dans la poutre,
c- laminer les lamelles pour extraire un jus des lamelles,
d- former sur une plaque rigide une feuille en assemblant les lamelles de telle manière qu'elles se chevauchent sur une largeur prédéterminée,
e- ajouter sur la feuille ainsi formée une couche absorbante,
f- presser et sécher la feuille.

5. Procédé selon la revendication 4, dans lequel le pressage est effectué simultanément pour plusieurs feuilles disposées chacune entre une plaque rigide et une couche absorbante.

6. Procédé selon la revendication 1, **caractérisé en ce que** la poutre est de section rectangulaire ou carrée.

7. Feuille obtenue à partir de pseudo-tronc de bananier, **caractérisée en ce qu'**elle comprend des lamelles de pseudo-tronc de bananier assemblées conformément au procédé selon l'une quelconque des revendications précédentes.

8. feuille selon la revendication 7, **caractérisée en ce que** les lamelles comportent des parties superposées présentant un chevauchement au moins égal à 5mm

9. feuille selon la revendication 8, **caractérisée en ce qu'**il s'agit d'une feuille de placage.

## Patentansprüche

1. Verfahren zum Herstellen eines Blattes aus einem Bananenstauden-Scheinstamm, **dadurch gekennzeichnet, dass** es die Schritte umfasst:
- Schneiden eines Balkens aus einem zentralen Abschnitt des Scheinstammes,
- Schneiden des Balkens in Streifen,
- Walzen der so erhaltenen Streifen,
- Bilden eines Blattes, indem die Streifen derart zusammengefügt werden, dass sie sich über eine vorgegebene Breite überlappen,
- Pressen und Trocknen des so erhaltenen Blattes.

2. Verfahren zum Herstellen eines Blattes aus einem Bananenstauden-Scheinstamm nach Anspruch 1, **dadurch gekennzeichnet, dass** die geschnittenen Streifen eine Dicke haben, die kleiner als 10 mm ist.

3. Verfahren zum Herstellen eines Blattes aus einem Bananenstauden-Scheinstamm nach Anspruch 1, **dadurch gekennzeichnet, dass** die das Blatt bildenden Streifen auf einer starren und mit einem absorbierenden Tuch überzogenen Platte zusammengefügt werden.

4. Verfahren nach Anspruch 1, umfassend die Schritte:
a- Schneiden eines Balkens aus einem zentralen Abschnitt des Scheinstammes durch aufeinander folgende Durchläufe eines Schneidmessers,
b- Schneiden des Balkens in einzelne Streifen,
c- Walzen der Streifen, um einen Saft aus den Streifen zu extrahieren,
d- Bilden eines Blattes auf einer starren Platte, indem die Streifen derart zusammengefügt werden, dass sie sich über eine vorgegebene Breite überlappen,
e- Anbringen einer absorbierenden Schicht auf dem so gebildeten Blatt,
f- Pressen und Trocknen des Blattes.

5. Verfahren nach Anspruch 4, wobei das Pressen gleichzeitig für mehrere Blätter erfolgt, die jeweils zwischen einer starren Platte und einer absorbierenden Schicht angeordnet sind.

6. Verfahren nach Anspruch 1, **dadurch gekennzeichnet, dass** der Balken einen rechteckigen oder viereckigen Querschnitt hat.

7. Blatt, das aus einem Bananenstauden-Scheinstamm erhalten wird, **dadurch gekennzeichnet, dass** es Streifen aus dem Bananenstauden-Scheinstamm umfasst, die gemäß dem Verfahren nach einem der vorhergehenden Ansprüche zusammengefügt werden.

8. Blatt nach Anspruch 7, **dadurch gekennzeichnet, dass** die Streifen übereinander angeordnete Teile umfassen, die eine Überlappung von mindestens gleich 5 mm aufweisen.

9. Blatt nach Anspruch 8, **dadurch gekennzeichnet, dass** es sich um ein Furnier handelt.

## Claims

1. Method for making a sheet from banana pseudo stem, **characterized in that** it comprises the steps of:
- cutting a beam from a central portion of the pseudo stem,
- slicing the beam into strips,
- laminating in a rolling mill the strips thus obtained,
- forming a sheet by assembling the strips in such a way that they overlap over a predetermined width,
- pressing and drying the sheet thus obtained.

2. Method for making a sheet from banana pseudo stem according to Claim 1, **characterized in that** the sliced strips are less than 10 mm thick.

3. Method for making a sheet from banana pseudo stem according to Claim 1, **characterized in that** the strips that make up the sheet are assembled on a rigid plate and covered with an absorbent cloth.

4. Method according to Claim 1, comprising the steps of:
a - cutting a beam from a central portion of the pseudo-stem, using successive passes of a blade,
b- cutting strips, one by one, from the beam,
c - rolling the strips to extract juice from the strips,
d - forming a sheet on a rigid plate by assembling the strips in such a way that they overlap over a determined width,
e - adding an absorbent layer to the sheet thus formed,
f - pressing and drying the sheet.

5. Method according to Claim 4, in which the pressing is performed simultaneously for several sheets each placed between a rigid plate and an absorbent layer.

6. Method according to Claim 1, **characterized in that** the beam is of rectangular or square cross section.

7. Sheet obtained from banana pseudo stem, **characterized in that** it comprises assembled banana-pseudo stem strips in accordance with the method according to any one of the preceding claims.

8. Sheet according to Claim 7, **characterized in that** the strips comprise superposed parts overlapping by at least 5 mm.

9. Sheet according to Claim 8, **characterized in that** it is a sheet of veneer.
